(19)

**Europäisches Patentamt**
**European Patent Office**
**Office européen des brevets**

(11)  **EP 1 683 338 B1**

(12)  **EUROPEAN PATENT SPECIFICATION**

(45) Date of publication and mention
of the grant of the patent:
**15.01.2014  Bulletin 2014/03**

(21) Application number: **04797610.5**

(22) Date of filing: **01.11.2004**

(51) Int Cl.:
*G06F 9/38* (2006.01)     *H04M 15/00* (2006.01)

(86) International application number:
**PCT/EP2004/012485**

(87) International publication number:
**WO 2005/050967 (02.06.2005 Gazette 2005/22)**

(54) **METHOD AND SYSTEM FOR DYNAMIC TARIFFING**

VERFAHREN UND SYSTEM ZUM DYNAMISCHEN TARIFBILDEN

PROCEDE ET SYSTEME DE TARIFICATION DYNAMIQUE

(84) Designated Contracting States:
**AT BE BG CH CY CZ DE DK EE ES FI FR GB GR
HU IE IS IT LI LU MC NL PL PT RO SE SI SK TR**

(30) Priority: **31.10.2003  US 516570 P**

(43) Date of publication of application:
**26.07.2006  Bulletin 2006/30**

(73) Proprietor: **Koninklijke KPN N.V.
2516 CK The Hague (NL)**

(72) Inventors:
• **MEINCKE, Wilheim, Werner
40882 Ratingen (DE)**
• **WEIDHASE, Tobias
40625 Dusseldorf (DE)**

(74) Representative: **Wuyts, Koenraad Maria et al
Koninklijke KPN N.V.,
Intellectual Property Group
P.O. Box 95321
2509 CH  Den Haag (NL)**

(56) References cited:
EP-A- 1 035 724          WO-A-02/51118
US-A- 5 991 378          US-A- 6 085 179
US-A1- 2002 072 333

• **COURCOUBETIS C ET AL: "An evaluation of
pricing schemes that are based on effective
usage" COMMUNICATIONS, 1998. ICC 98.
CONFERENCE RECORD. 1998 IEEE
INTERNATIONAL CONFERENCE ON ATLANTA,
GA, USA 7-11 JUNE 1998, NEW YORK, NY, USA,
IEEE, US, vol. 1, 7 June 1998 (1998-06-07), pages
265-269, XP010284506 ISBN: 0-7803-4788-9**

Description

**Field of the invention**

The invention related to a system for dynamic tariffing of telecommunication services, the system comprising at least one computer. The invention further relates to a method for dynamic tariffing of telecommunication services in at least one computer comprising one or more modules.

**Background**

In telecommunications tariffing methods are known where frequent usage of telecommunication services is rewarded with bonuses, discounts or cheaper tariffs. Calculation of tariffs is commonly based on time units, like day, week or month. E.g. when sending SMS messages in GSM the tariff can become lower or a bonus can be rewarded when sending more then 10 SMS messages within 24 hours. Each day the tariff calculation algorithm starts again.

A disadvantage of existing tariffing methods is the inflexible usage of time units. Known tariffing solutions often make use of monthly calculations. On receiving the bill customers can then monthly check whether the tariffs of telecommunication services are satisfactory or the usage of telecommunication services should change in order to have a better tariff. Especially with prepaid telecommunication services it is common to have such a monthly tariffing algorithm.

Related systems and methods are disclosed in the below mentioned documents:

W00251118: relates to a data processing system for use in an electronic communication network providing communication services for stations (3) connected to the network, comprising computer processing means (4) for processing data, and storage means connected to said computer processing means for storing data on a storage medium, wherein the computer processing means comprises first means for initialising a first parameter with a network service access starting value and a second parameter with a consumption value in the storage means, said values being associated with a first station connected to the network, second means for decreasing the first parameter with an amount corresponding to a certain usage of any of said communication services, and third means for increasing said second parameter with the same amount.

XP10284056; Courcoubetis et al.: relates to an evaluation of usage-based pricing schemes that are based on bounds of the effective bandwidth. The schemes include ones that require simple measurements (time and volume) for the whore duration of a call, and two schemes that require measurements in distinct time intervals, smaller than the duration of a call: pricing with renegotiation and the virtual' bucket scheme. Using MPEG-i compressed video, the schemes are compared for different link capacities and buffer sizes in terms of their fairness, i.e., the ability to capture the relative amount of resources used by connections.

**Aim of the invention**

It is the aim of the invention to overcome the disadvantages of the background and enable dynamic and flexible tariffing.

**Summary of the invention**

The present invention provides a solution for dynamic and flexible tariffing.

The present invention is defined by the attached independent claims 1, 8. Further preferred features may be found in the dependent claims appended thereto.

**Brief description of the drawings**

The invention will be explained in greater detail by reference to exemplary embodiments shown in the drawings, in which:

Figure 1 shows a leakage bucket model;
Figure 2 shows an architectural overview of the system.

**Detailed description of the invention**

For the purpose of teaching of the invention, preferred embodiments of the method and system of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

Advantageous for prepaid, but also useable for postpaid contracts, is an automatic adaptation of tariffs that is based on the average usage by the customer and information about the real time actual tariff and that is independent of fixed time units. Tariffing using the principle of "leakage bucket" offers the customer a tariff concept that automatically calculates the actual tariff from the service usage. Moreover it enables the customer to get informed about the current actual tariff immediately.

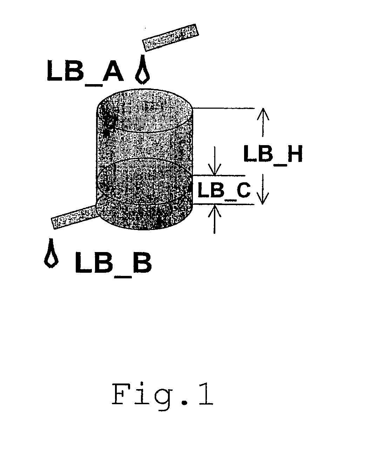

In figure 1 a leakage bucket is shown. The principle of the leakage bucket is used to calculate tariffs. Characteristic for the leakage bucket is that a virtual fill-level is stored per customer in a service platform. The fill-level is altered by an in software implemented algorithm running on a computer. The fill-level represents the actual tariff, i.e. the actual costs for telecommunication services for the customer.

The fill-level is calculated as follows:

$$LB\_C = LB\_A (i) - LB\_B (t), \text{ with } 0 <= LB\_C <= LB\_H$$

The variables are used as follows:

LB_C: the current fill-level of the leakage bucket
LB_H: the maximum fill-level
LB_A (i): filling of bucket because of used services (in-flow)
LB_B (t): constant reduction of fill-level (out-flow)

The maximum fill-level LB_H is divided into 'n' parts. The current tariff for telecommunication services is determined by the current fill-level LB_C, i.e. the current part of LB_H that the fill-level is in. E.g. if n=3, the following derivation of tariffs can be made:

$$0 <= LB\_C < LB\_H/3 \quad .... \text{ Tarif 1}$$

$$LB\_H/3 <= LB\_C < 2\ LB\_H/3 \ .... \text{ Tarif 2}$$

$$2\ LB\_H/3 <= LB\_C <= LB\_H \quad .... \text{ Tarif 3}$$

Logically Tarif 1 > Tarif 2 > Tarif 3.

The fill-level is based on services and its service characteristics, like costs made by the customer, events (e.g. the number of phone calls made), the time spend by a customer on services, or a combination of these.

Examples of services are:

- Phone calls (incoming or outgoing);
- SMS or MMS messages;
- GPRS Data traffic;
- Content Access.

Examples of service characteristics are:

- time spend;
- costs made;
- volume used;
- events done.

Weighing of a service (i.e. the strength of the in-flow) is flexibly derivable using tables. E.g. incoming calls from a fixed network (i.e. calls to the customer from a phone in a fixed telecommunications network) can be rated higher, thus resulting in a larger in-flow.

Bonus or promotion offerings can increase the in-flow or change fill-level to another level. E.g. on the customer's birthday the fill-level is set to the next favorable level. The customer is informed about this by USSD or SMS message. A specific algorithm can monitor the fill-level and trigger bonus actions at specific levels.

The out-flow is defined by the customer's subscription. E.g. the amount of handset subsidy is used to define the out-flow.

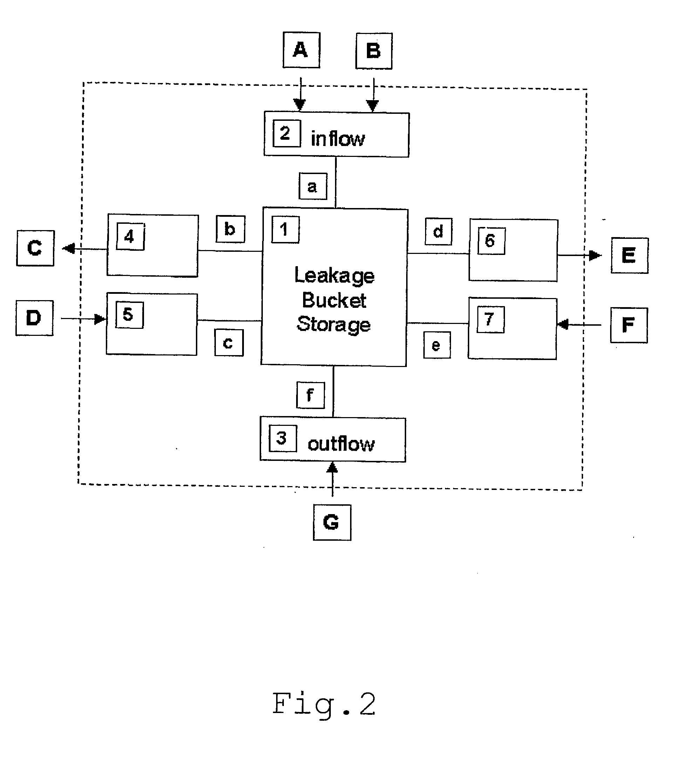

Figure 2 shows an exemplary embodiment of the invention. Other embodiments are possible where one or more modules are left out. It is also possible that the functionality as described below differs in other embodiments, based on the text above.

Overview of the Modules as implemented in one or more computers according to the exemplary embodiment:

1. Leakage Bucket Storage Module
The fullness of the "Bucket" represents the current tariff for the usage of telecommunication services for a certain subscriber.

2. "Inflow" Control Module
Controls the "inflow" of the "Bucket".

3. "Outflow" Control Module
Determines the "outflow" of the "Bucket".

4. Info Push Module
Recognise the transitions to different stages in the "Bucket" and inform the user about these events by e. g. by SMS, USSD, WAP Pushes.

5. Info Access Module
Displays the status of the "Bucket" in case of user request by e.g. i-mode™, web, SMS, Voice, USSD or other known methods.

6. Tariff Definition Module
Defines the current tariff for telecommunication services based on the present fullness in the Bucket and makes it available for an external rating engine.

7. Direct Modification Module
Allows the modification of the fullness directly e.g. sets the level in the "Bucket" to the next better tariff representation in case of certain events/bonuses.

For each module a functional description will be given.

Leakage Bucket Storage Module [1]

The Leakage Bucket Storage Module [1] is the central functional module in the arrangement of the modules [2]-[7]. This module comprises a counter part, a configuration part and a runtime part.

The counter part consists of a counter, which counts units individually for one subscriber or individually for a group of subscribers. A unit is the smallest entity, which represents the usage of telecommunication services of a subscriber or a group of subscribers. The meaning of a unit / of units are configurable (e. g. 1 call minute to a destination in the home network is equal to x units) and is defined by the Inflow Control Module [2]. The value of the counter is related to a certain "level of filling in the Bucket". This level represents the current tariff (e. g. the call in the home network cost xyz Euro per minute) for usable telecommunication services by a subscriber or by a group of subscribers and is determined by the Tariff Definition Module [6].

The configuration part allows the "form" and the settings of the bucket. It determines

• the maximum of the counter value

• the relation between the amount of units (= value of the counter) and the "level of filling" in the Bucket, this can be equal, linear, exponential or other applicable mathematical function (note: means visually, the diameter of the bucket can be a function of the height of the bucket).

- Up to n sub-levels (n can be an integer greater 0), which define areas with different amount of units whereas one area of filling level is assigned to one tariff representation. The distance between the sub-levels can be equidistantly, can be follow a mathematical function or can be defined arbitrarily.

The runtime part of the Leakage Bucket Storage Module increases respectively decreases the counter of the counter part, calculate the level of fullness of the bucket derived from the present value of the counter, limits the counter value to the configured maximum, observe the transitions between of the filling level and the configured sub-levels, stores reports subscriber individually or group individually in a data base and acts to the other modules by supporting the interfaces [a] to [f] (description of these interfaces see the description of modules [2] to [7]).

Inflow Control Module [2]

The Inflow Control Module [2] controls the inflow for the Leakage Bucket Storage Module [1] using the interface [a] by computing the input data from the external interfaces [A] and [B].

External Interface [A] supplies service information data, which presents telecommunications service usage or events or non-telecommunications events from / for the subscriber or a group of subscribers. The Inflow Control Module receives the data and calculate the appropriate units for the Leakage Bucket Storage Module [1].

Telecommunication service usage data can be (examples)

- output of an external rating engine (e. g. cost of the last call was xyz Euro)
- CDR (Call Data Record) contents e. g. the duration, the destination, .. of a call
- SDR (Service Data Record) contents the specific usage of a service
- EDR (Event Data Record) informs about specific events
- other usage data contents ...

Services can be

- Voice Calls

- Data sessions

Usage can be

- duration of a call measured in minutes

- volume of data sessions

Telecommunication events can be (examples)

- bonus points from the service or network provider
- subscription of a i-mode™ content subscription

Non-Telecommunication events can be (examples)

- bonus points from an airline company

The external interface [B] delivers parameter to weight the input parameter supplied by interface [A] resulting in a modification of the rules for generating units for the Leakage Bucket Storage Module [1]. For example incoming calls from the national networks could be weighted higher than the outgoing calls or the service or network provider can determine that the next 10 SMS are free/cheaper. The latter case can be aligned with a timeframe e. g. the next 10 SMS are free/cheaper till at the end of the day, weekend or month.

Outflow Control Module [3]

The Outflow Control Module [3] controls the outflow for the Leakage Bucket Storage Module [1] using the interface [f] by decreasing the units in the counter of the Leakage Bucket Storage Module [1].

The algorithm of the Outflow Control Module [3] decreases the units continuously (e. g. x units in y hours) and acts independently of external or internal events. The speed is customer individually configurable derived from the subscription conditions data (for example a high mobile subvention leads to a higher speed in the degradation). For this purpose the network operator / service provider can use the external interface [G].

Info Push Module [4]

The Info Push Module [4] prepares and pushes information for the customer automatically through the external interface [C]. The data are fetched from the Leakage Bucket Storage Module [1] using the interface [b].
The subscriber will be informed about changes in his / her "Leakage Bucket" status e. g. transitions from one tariff representation to an other accordingly his individual settings (what kind of information, which presentation form) by SMS, USSD, WAP, Voice.

Info Access Module [5]

The Info Access Module [5] prepares and send information on demand of the customer or the customer care staff via the external interface [D]. The request can be based on i-mode™, the web, SMS, USSD, IVR and other appropriate transport mechanisms or services.
The implemented SW of the Info Access Module received the request, fetched the needed data via the internal interface [c] from the Leakage Bucket Storage Module [1] prepares the data specifically for the requested methods. The info for the customer shows the current status as well as the history and gives advices for future strategies for the usage of telecommunication services from the customer point of view.

Tariff Definition Module [6]

The Tariff Definition Module [6] prepares data for the present valid tariff for telecommunication services individually for the customer or group of customers based on the status of the counter in the Leakage Bucket Storage Module [1].
For this purpose the Tariff Definition Module fetches data from the Leakage Bucket Storage Module [1] via the interface [d] and supplies the external rating engine via the external interface [E]. Depend on the interface specification between the Leakage Bucket Infrastructure and the external rating engine the Tariff Definition Module supplies rough data for tariff calculation or the tariff for the requested telecommunication service.

Modification Access Module [7]

The Modification Access Module [7] allows the Service Provider / Network Operator via the external interface [F] the modification of certain parameters in the Leakage Bucket Storage Module [1] directly using the internal interface [e].
The Service Provider / Network Operator can realise certain loyalty and promotion champagnes by using this capability for example on the customer's birthday the counter in the the Leakage Bucket Storage Module [1] can be set on a higher level that results in a better tariff for the customer.

**Claims**

1. System for dynamic tariffing of telecommunication services, the system comprising at least one computer, the at least one computer comprising
   a leakage bucket storage module (1) for handling a current tariff variable (LB_C), the current tariff variable (LB_C) determining a current tariff;
   an inflow control module (2) for controlling the increase (LB_A) of the current tariff variable (LB_C),
   the inflow control module (2) comprising a third interface (A) for receiving service information data and a fourth interface (B) for receiving weighing parameters to weigh the service information data, the weighted service information data controlling the increase (LB_A) of the current tariff variable (LB_C)
   an outflow control module (3) for controlling the decrease (LB_B) of the current tariff variable (LB_C) as a function of time;
   the inflow control module (2) being arranged to communicate with the leakage bucket storage module (1) via a first interface (a) and the outflow control module (3) being arranged to communicate with the leakage bucket storage module (1) via a second interface (f).

2. System according to claim 1, wherein the outflow control module (3) comprises a fifth interface (G) to receive subscription conditions data, the subscription conditions data controlling the decrease (LB_B) of the current tariff variable (LB_C).

3. System according to any of the preceding claims, wherein the at least one computer further comprising a tariff definition module (6) for reading the current tariff variable (LB_C), the tariff definition module (6) being arranged to communicate with the leakage bucket storage module (1) via a sixth interface (d), the tariff definition module (6) further being arranged to communicate with an external rating engine via a seventh interface (E).

4. System according to any of the preceding claims, wherein the at least one computer further comprises a direct modification module (7) for directly setting the current tariff variable (LB_C) to a specific value, the direct modification module (7) being arranged to communicate with the leakage bucket storage module (1) via a eighth interface (e), the direct modification module (7) further being arranged to communicate with a service provider system via a ninth interface (F).

5. System according to any of the preceding claims, wherein the at least one computer further comprises an info push module (4) for preparing and pushing informative messages to a customer through a tenth interface (C), the info push module (4) being arranged to communicate with the leakage bucket storage module (1) via a eleventh interface (b).

6. System according to any of the preceding claims, wherein the at least one computer further comprises an info access module (5) for providing the current tariff variable (LB_C) when a request is received through a twelfth interface (D), the info access module (5) being arranged to communicate with the leakage bucket storage module (1) via a thirteenth interface (c).

7. Method for dynamic tariffing of telecommunication services in at least one computer comprising one or more modules, the method comprising the steps of
handling a current tariff variable (LB_C), wherein the current tariff variable (LB_C) determines a current tariff;
controlling the increase (LB_A) of the current tariff variable (LB_C)through using weighted service information data;
controlling the decrease (LB_B) of the current tariff variable (LB_C)as a function of time.

8. Method according to claim 7, wherein using a subscription conditions data for controlling the decrease (LB_B) of the current tariff variable (LB_C).

9. Method according to any of claims 7,8, wherein reading and sending the current tariff variable (LB_C) to an external rating engine via a seventh interface (E).

10. Method according to any of claims 7-9, wherein directly setting the current tariff variable (LB_C) to a specific value.

11. Method according to any of the claims 7-10, wherein preparing and pushing informative messages to a customer through a tenth interface (C).

12. Method according to any of the claims 7-11, wherein providing the current tariff variable (LB_C) when a request is received through a twelfth interface (D).

**Patentansprüche**

1. System zur dynamischen Tarifierung von Telekommunikationsdiensten, wobei das System mindestens einen Computer aufweist, wobei der mindestens eine Computer aufweist:

ein Leaky-Bucket-Speichermodul (1) zum Handhaben einer aktuellen Tarifvariablen (LB_C), wobei die aktuelle Tarifvariable (LB_C) einen aktuellen Tarif bestimmt;
ein Zuflusssteuermodul (2) zum Steuern der Erhöhung (LB_A) der aktuellen Tarifvariablen (LB_C), wobei das Zuflusssteuermodul (2) eine dritte Schnittstelle (A) zum Empfangen von Dienstinformationsdaten und eine vierte Schnittstelle (B) zum Empfangen von Gewichtungsparametern, um die Dienstinformationsdaten zu gewichten, aufweist, wobei die gewichteten Dienstinformationsdaten die Erhöhung (LB_A) der aktuellen Tarifvariablen (LB_C) steuern,
ein Abflusssteuermodul (3) zum Steuern der Verringerung (LB_B) der aktuellen Tarifvariablen (LB_C) in Abhängigkeit von der Zeit;

wobei das Zuflusssteuermodul (2) dafür eingerichtet ist, mit dem Leaky-Bucket-Speichermodul (1) über eine erste Schnittstelle (a) zu kommunizieren, und das Abflusssteuermodul (3) dafür eingerichtet ist, mit dem Leaky-Bucket-Speichermodul (1) über eine zweite Schnittstelle (f) zu kommunizieren.

2. System nach Anspruch 1, wobei das Abflusssteuermodul (3) eine fünfte Schnittstelle (G) aufweist, um Abonnementsbedingungsdaten zu empfangen, wobei die Abonnementsbedingungsdaten die Verringerung (LB_B) der aktuellen Tarifvariablen (LB_C) steuern.

3. System nach einem der vorhergehenden Ansprüche, wobei der mindestens eine Computer ferner ein Tarifdefinitionsmodul (6) zum Lesen der aktuellen Tarifvariablen (LB_C) aufweist, wobei das Tarifdefinitionsmodul (6) dafür eingerichtet ist, mit dem Leaky-Bucket-Speichermodul (1) über eine sechste Schnittstelle (d) zu kommunizieren, wobei das Tarifdefinitionsmodul (6) ferner dafür eingerichtet ist, mit einer externen Rating-Engine über eine siebente Schnittstelle (E) zu kommunizieren.

4. System nach einem der vorhergehenden Ansprüche, wobei der mindestens eine Computer ferner ein Direktmodifikationsmodul (7) zum direkten Einstellen der aktuellen Tarifvariablen (LB_C) auf einen speziellen Wert aufweist, wobei das Direktmodifikationsmodul (7) dafür eingerichtet ist, mit dem Leaky-Bucket-Speichermodul (1) über eine achte Schnittstelle (e) zu kommunizieren, wobei das Direktmodifikationsmodul (7) ferner dafür eingerichtet ist, mit einem Dienstanbietersystem über eine neunte Schnittstelle (F) zu kommunizieren.

5. System nach einem der vorhergehenden Ansprüche, wobei der mindestens eine Computer ferner ein Informations-Push-Modul (4) zum Erstellen und aktiven Zustellen informativer Nachrichten an einen Kunden über eine zehnte Schnittstelle (C) aufweist, wobei das Informations-Push-Modul (4) dafür eingerichtet ist, mit dem Leaky-Bucket-Speichermodul (1) über eine elfte Schnittstelle (b) zu kommunizieren.

6. System nach einem der vorhergehenden Ansprüche, wobei der mindestens eine Computer ferner ein Informationszugriffsmodul (5) zum Bereitstellen der aktuellen Tarifvariablen (LB_C), wenn eine Anfrage über eine zwölfte Schnittstelle (D) empfangen wird, aufweist, wobei das Informationszugriffsmodul (5) dafür eingerichtet ist, mit dem Leaky-Bucket-Speichermodul (1) über eine dreizehnte Schnittstelle (c) zu kommunizieren.

7. Verfahren zur dynamischen Tarifierung von Telekommunikationsdiensten in mindestens einem Computer, der ein oder mehrere Module aufweist, wobei das Verfahren die folgenden Schritte aufweist:

   Handhaben einer aktuellen Tarifvariablen (LB_C), wobei die aktuelle Tarifvariable (LB_C) einen aktuellen Tarif bestimmt;
   Steuern der Erhöhung (LB_A) der aktuellen Tarifvariablen (LB_C) durch Verwendung von gewichteten Dienstinformationsdaten;
   Steuern der Verringerung (LB_B) der aktuellen Tarifvariablen (LB_C) in Abhängigkeit von der Zeit.

8. Verfahren nach Anspruch 7, wobei Abonnementsbedingungsdaten zum Steuern der Verringerung (LB_B) der aktuellen Tarifvariablen (LB_C) verwendet werden.

9. Verfahren nach einem der Ansprüche 7, 8, wobei die aktuelle Tarifvariable (LB_C) gelesen und über eine siebente Schnittstelle (E) an eine externe Rating-Engine gesendet wird.

10. Verfahren nach einem der Ansprüche 7-9, wobei die aktuelle Tarifvariable (LB_C) direkt auf einen speziellen Wert eingestellt wird.

11. Verfahren nach einem der Ansprüche 7-10, wobei informative Nachrichten erstellt und über eine zehnte Schnittstelle (C) aktiv an einen Kunden zugestellt werden.

12. Verfahren nach einem der Ansprüche 7-11, wobei die aktuelle Tarifvariable (LB_C) bereitgestellt wird, wenn eine Anfrage über eine zwölfte Schnittstelle (D) empfangen wird.

**Revendications**

1. Système de tarification dynamique de services de télécommunication, le système comprenant au moins un ordinateur, ledit au moins un ordinateur comprenant

un module de stockage par seau percé (1) permettant de gérer une variable de tarif actuel (LB_C), la variable de tarif actuel (LB_C) déterminant un tarif actuel ;

un module de régulation de flux entrant (2) permettant de réguler la hausse (LB_A) de la variable de tarif actuel (LB_C), le module de régulation de flux entrant (2) comprenant une troisième interface (A) permettant de recevoir des données d'informations de services et une quatrième interface (B) permettant de recevoir des paramètres de pondération pour pondérer les données d'informations de services, les données d'informations de services pondérées régulant la hausse (LB_A) de la variable de tarif actuel (LB_C) ;

un module de régulation de flux sortant (3) permettant de réguler la baisse (LB_B) de la variable de tarif actuel (LB_C) en fonction du temps ;

le module de régulation de flux entrant (2) étant conçu pour communiquer avec le module de stockage par seau percé (1) via une première interface (a) et le module de régulation de flux sortant (3) étant conçu pour communiquer avec le module de stockage par seau percé (1) via une deuxième interface (f).

2. Système selon la revendication 1, dans lequel le module de régulation de flux sortant (3) comprend une cinquième interface (G) pour recevoir des données de conditions d'abonnement, les données de conditions d'abonnement régulant la baisse (LB_B) de la variable de tarif actuel (LB_C).

3. Système selon l'une quelconque des revendications précédentes, dans lequel ledit au moins un ordinateur comprend en outre un module de définition de tarif (6) permettant de lire la variable de tarif actuel (LB_C), le module de définition de tarif (6) étant conçu pour communiquer avec le module de stockage par seau percé (1) via une sixième interface (d), le module de définition de tarif (6) étant en outre conçu pour communiquer avec un moteur de classification externe via une septième interface (E).

4. Système selon l'une quelconque des revendications précédentes, dans lequel ledit au moins un ordinateur comprend en outre un module de modification directe (7) permettant de donner directement à la variable de tarif actuel (LB_C) une valeur particulière, le module de modification directe (7) étant conçu pour communiquer avec le module de stockage par seau percé (1) via une huitième interface (e), le module de modification directe (7) étant en outre conçu pour communiquer avec un système de fournisseur de services via une neuvième interface (F).

5. Système selon l'une quelconque des revendications précédentes, dans lequel ledit au moins un ordinateur comprend en outre un module de pousser d'informations (4) permettant de préparer des messages informatifs et de les pousser vers un client par le biais d'une dixième interface (C), le module de pousser d'informations (4) étant conçu pour communiquer avec le module de stockage par seau percé (1) via une onzième interface (b).

6. Système selon l'une quelconque des revendications précédentes, dans lequel ledit au moins un ordinateur comprend en outre un module d'accès à des informations (5) permettant de fournir la variable de tarif actuel (LB_C) sur réception d'une demande par le biais d'une douzième interface (D), le module d'accès à des informations (5) étant conçu pour communiquer avec le module de stockage par seau percé (1) via une treizième interface (c).

7. Procédé de tarification dynamique de services de télécommunication dans au moins un ordinateur comprenant un ou plusieurs modules, le procédé comprenant les étapes consistant à

gérer une variable de tarif actuel (LB_C), la variable de tarif actuel (LB_C) déterminant un tarif actuel ;

réguler la hausse (LB_A) de la variable de tarif actuel (LB_C) au moyen de données d'informations de services pondérées ;

réguler la baisse (LB_B) de la variable de tarif actuel (LB_C) en fonction du temps.

8. Procédé selon la revendication 7, comprenant l'étape consistant à utiliser des données de conditions d'abonnement pour réguler la baisse (LB_B) de la variable de tarif actuel (LB_C).

9. Procédé selon l'une quelconque des revendications 7, 8, comprenant l'étape consistant à lire la variable de tarif actuel (LB_C) et à l'envoyer à un moteur de classification externe via une septième interface (E).

10. Procédé selon l'une quelconque des revendications 7 à 9, comprenant l'étape consistant à donner directement à la variable de tarif actuel (LB_C) une valeur particulière.

11. Procédé selon l'une quelconque des revendications 7 à 10, comprenant l'étape consistant à préparer des messages informatifs et à les pousser vers un client par le biais d'une dixième interface (C).

**12.** Procédé selon l'une quelconque des revendications 7 à 11, comprenant en outre l'étape consistant à fournir la variable de tarif actuel (LB_C) sur réception d'une demande par le biais d'une douzième interface (D).

LB_A

LB_H

LB_C

LB_B

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0251118 A